# EUROPEAN PATENT SPECIFICATION

(11) **EP 2 856 859 B1**
(45) Date of publication and mention of the grant of the patent: **13.07.2016**
(21) Application number: 14003439.8
(22) Date of filing: 07.10.2014
(51) Int. Cl.: A01G 9/02

(54) **Wall module system, a method of cultivating plants, and use of a wall module system for cultivating plants**
Wandmodulsystem, Verfahren zum Kultivieren von Pflanzen und Verwendung eines Wandmodulsystems zum Kultivieren von Pflanzen
Système de paroi modulaire, procédé de culture de plantes et utilisation d'un système de paroi modulaire pour cultiver des plantes

(30) Priority: 07.10.2013 DK 201300570
(43) Date of publication of application: 08.04.2015
(73) Proprietor: Natural Greenwalls ApS, 5200 Odense V (DK)
(72) Inventor: Grønning, Ulrich, 5200 Odense V (DK)
(74) Representative: Nielsen, Charlotte

(56) References cited:
- EP-A1- 2 335 473
- WO-A1-2004/006652
- WO-A2-2012/081945
- AU-A1- 2006 241 355
- DE-U1- 9 102 347
- JP-A- 2012 039 969

## Description

### Field of invention

The present invention relates to a wall module system and a method of cultivating plants placed either inside or outside e.g. on a building, and to the use of a wall module system for cultivating plants.

### Prior art

It is known to grow plants in wall modules e.g. inside or outside buildings. Many of these solutions are configured to provide automatic watering of the plants. The prior art is, however associated with several drawbacks.

Some of the known prior art solutions require recirculation by using a pump that is connected to a tank. A pump is energy consuming and requires a power supply. Accordingly, such solutions are expensive and can only be installed in areas with access to electricity. Therefore, in many applications, it is not possible to install these solutions due to lack of access to the mains.

The Korean patent application KR 101105543 describes a wall module system for cultivating plants in which the modules comprise a rail system. A number of pots are mounted on the rail system. Each pot has a drainage system wherein the excess water is led to the underlying pot without contacting the soil in that pot. The drainage system comprises a separate chamber in each pot, a filter, a funnel, and a vertical inlet and outlet. The inlet and outlet are connected to each pot.

Some of the known solutions require continuous water supply. This means that these systems can only be installed in places with access to water pipes from the water supply Accordingly, there is a need for a system that is not restricted by these requirements.

WO 2012081945 A2 discloses a plant cultivating system comprising a plurality of vertically spaced pots configured to drain access water via a common drain pipe system provided adjacent to the pots.

AU 2006241355 A1 discloses a modular growing system comprising a plurality of growing modules. Each growing module is provided with a fluid channel extending along a first side of the growing module.

DE 9102347 U1 discloses a plant cultivating system comprising a plurality of pots, wherein excess water is drained from a pot in such a manner that the excess water is conducted to an underlying pot by bringing the excess water into contact with the media in the. Moreover, the pots are provided with a filter arranged at the bottom portion of the pots.

In some of the prior art solutions, it is very difficult to control the water drainage. In these prior art solutions, water is actually dripping on the floor due to the uncontrollable water drainage.

Moreover, a majority of the prior art systems are constructed in such a way that the water is distributed by means of gravity from one module to the underlying module. Accordingly, the plants in the topmost modules are normally well watered, whereas the lower positioned modules are being less effectively watered. Therefore, there is risk of overwatering the topmost plants and at the same time risk of drying out the lower positioned plants.

Thus, there is a need for a wall module system and a method which enable controllable water drainage and which reduce or even eliminate the above mentioned disadvantages of the prior art.

It is also an object of the present invention to provide a wall module system that can be used without a pump and without connection to a water pipe of a water supply.

### Summary of the invention

The object of the present invention can be achieved by a wall module system as defined in claim 1 and by a method as defined in claim 9. Preferred embodiments are defined in the dependent sub claims and explained in the following description and illustrated in the accompanying drawings.

The wall module system according to the invention is a wall module system comprising a plurality of vertically spaced pots, where the wall module system comprises one or more tracks constituting a base for mounting the pots, where the pots are configured to be attached to one or more tracks, where each pot is provided with means for draining excess water. Each pot is provided with a water reservoir inside the pot and a drainage member that is configured to drain excess water from the pot in such a manner that the excess water is conducted through the underlying pot without bringing the excess water into contact with a media such as potting soil when the media such as potting soil is filled into the pot.

Hereby, it is achieved that the wall module system enables controllable water drainage. It is a major advantage that excess water is prevented from being brought into contact with a media such as potting soil when the media such as potting soil is filled into the pot. Hereby, spreading of plant diseases caused by pathogens (infectious organisms) can be prevented, by way of example.

By the expression: "the excess water is conducted through an underlying pot without bringing the excess water into contact with a media such as potting soil, when the media such as potting soil is filled into the pot" is meant that excess water is conducted through an underlying pot unless there is no underlying pot. This means that excess water from all pots except from the lowermost pots is conducted through an underlying pot.

By the term "wall module system" is meant a system configured to be mounted on or in close proximity to a wall, e.g. a wall of a room inside a building or outside on a wall (e.g. of a building).

The wall module system comprises a plurality of vertically spaced pots. This means that the pots are vertically spaced.

The wall module system comprises one or more tracks constituting a base for mounting the pots.

The base or track member may comprise one large track e.g. made as a one-piece body. The track or track member may, however, also comprise a plurality of tracks configured to be mechanically attached to one another.

Each pot is provided with means for draining excess water so that excess water can be removed from the pot.

The media may contain any type of pot media suitable when cultivating plants.

It may be an advantage that the pots are provided with a drainage member having an output pipe inserted into a connection pipe extending between the respective pot and an underlying pot.

It means that the pots are provided with a drainage member having an output pipe inserted into a connection pipe extending between the respective pot and the underlying pot unless there is no underlying pot (that means all pots except from the lowermost pots).

It may be advantageous that the pots are provided with an inlet pipe and that the connection pipe connected to the superjacent pot is connected to the inlet pipe.

Hereby, it is achieved that the connection pipe may be easily dismantled e.g. during replacement and mounting of pots to the track(s).

It may be beneficial that the pots are provided with a drainage member constituting a chamber within the pot, where the chamber is provided with an opening through which the outlet pipe and/or the connection pipe extend.

Hereby, it is achieved that the chamber can be applied as means for distributing excess water from above to the underlying part of the drainage system.

It may be an advantage that a filter member is removably arranged in the drainage member and that the filter member comprises a filter configured to prevent the drainage member from clogging.

Hereby, it is achieved that the drainage system will keep being efficient and well-functioning.

It may be an advantage that the inlet pipe and the filter member including the filter is a one-piece body.

Hereby, it is easy to insert and remove the filter member into the drainage member.

It may be advantageous that a funnel member is provided in the drainage member and that the funnel member comprises a funnel configured to drain away excess water entering the drainage member.

Hereby, it is achieved that excess water can be drained away effectively.

It may be beneficial that the connection pipe is slidably mounted to the adjacent outlet pipe so that the connection pipe is vertically displaceable.

Hereby, it is possible to vertically displace the connection pipe and hereby remove the connection pipe so that a pot can be removed without moving the other pots.

It may be an advantage that all connection pipes are slidably mounted to the adjacent outlet pipes so that the connection pipes are vertically displaceable.

It may be beneficial that the pots are slidably mounted in tracks in such a manner that the horizontal position of the pots can be adjusted.

Hereby, it is achieved that the pots can be arranged according to specific positional requirements. This solution offers a great degree of design freedom during the mounting of the pots.

It may be an advantage that (at least a subset of) the pipes are conical. Hereby, it is possible to adjust the distance between the pipes that are connected to each other.

It may be an advantage that the drainage member is provided with one or more vertically extending mounting pins.

It may be beneficial that the drainage member is provided with one or more vertically extending mounting pins and that corresponding mounting holes are provided in the filter member.

Hereby, it is possible to provide an optimum positioning of the filter member within the drainage member.

It may be an advantage that the wall module system comprises a plurality of tracks attached to each other to form one large track member, and that each track member comprises a holding member configured to hold a horizontally arranged pipe adapted to supply the pots with water.

The tracks may be configured to receive a predefined number of pots e.g. five pots. It may be an advantage that the tracks are configured to be shortened e.g. by sawing. This may be done by using tracks made in e.g. a plastic material.

It may be an advantage that each pot comprises a drainage member that comprises a number of walls extending perpendicular to the bottom of the pot and hereby constitutes a box-shaped compartment.

It may be an advantage that the wall module system comprises a water tank configured to function as a water reservoir from which water is distributed to the pots.

It is also possible to connect the wall module system to a water installation (e.g. a water piping) delivering water that can be distributed to the pots.

It may be advantageous that the drainage members of the pots are arranged in the corner region of the pots. Hereby, it is achieved that more space is available to plant a plant.

The method according to the invention is a method for cultivating plants in a wall module system comprising a plurality of pots. The method is characterised in that it comprises the step of watering the pots and draining excess water through an underlying pot without bringing the excess water into contact with a media such as potting soil, when such media (e.g. potting soil) has been filled into the pot.

Hereby, it is achieved that the method makes it possible to cultivate plants in a wall module system in a way in which water drainage is controlled and where spreading of plant diseases caused by pathogens (infectious organisms) can be prevented.

By the expression: "draining excess water through an underlying pot without bringing the excess water into contact with a media such as potting soil, when such media (e.g. potting soil) has been filled into the pot" is meant that excess water is conducted to an underlying pot unless there is no underlying pot. This means that in all pots, except from the lowermost pots, excess water is conducted to an underlying pot.

It may be an advantage to apply a method that includes the step of cultivating plants in a wall module system according to one of the preceding claims 1-8.

### Description of the Drawings

The invention will become more fully understood from the detailed description given herein below. The accompanying drawings are given by way of illustration only, and thus, they are not limitative of the present invention. In the accompanying drawings:
- Fig. 1: shows a perspective view of a wall module system according to the invention;
- Fig. 2: shows a close-up cross-sectional view of two adjacent pots of a wall module system according to the invention;
- Fig. 3: shows a perspective and exploded view of a wall module system according to the invention;
- Fig. 4: shows an exploded perspective view of a wall module system according to the invention;
- Fig. 5: shows a perspective cross-sectional view of three pots arranged above each other;
- Fig. 6 a): shows the wall module system shown in Fig. 3;

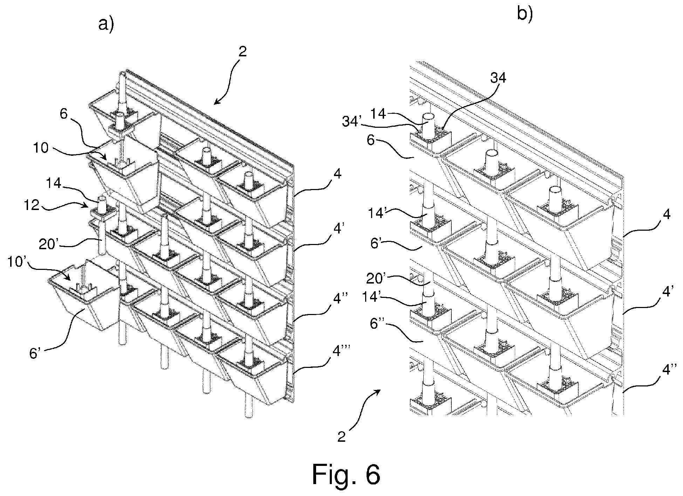

- Fig. 6 b): shows a close-up view of a wall module system according to the invention;

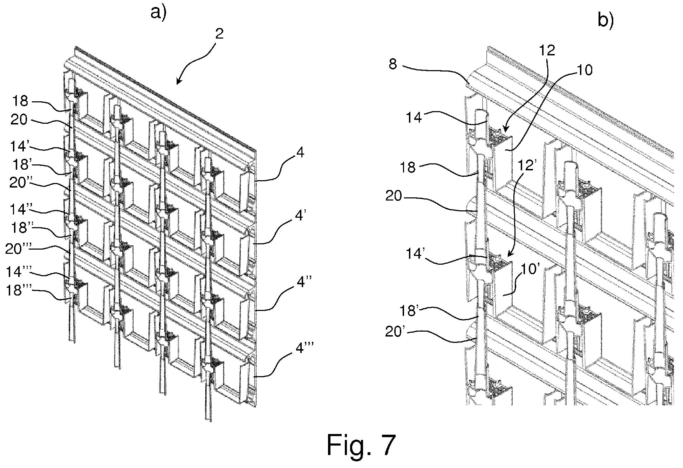

- Fig. 7 a): shows a perspective cross-sectional view of a wall module system according to the invention;
- Fig. 7 b): shows a close-up view of the wall module system shown in Fig. 7 a);

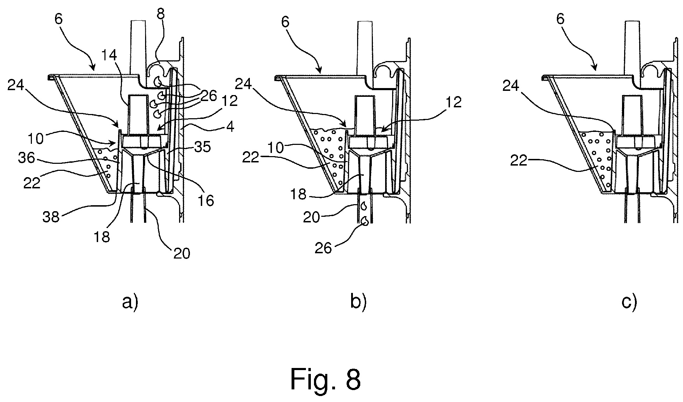

- Fig. 8 a): shows a schematically cross-sectional view of a pot being watered;
- Fig. 8 b): shows a schematically cross-sectional view of a pot from which excess water is drained;
- Fig. 8 c): shows a schematically cross-sectional view of a pot after the excess water has been drained;

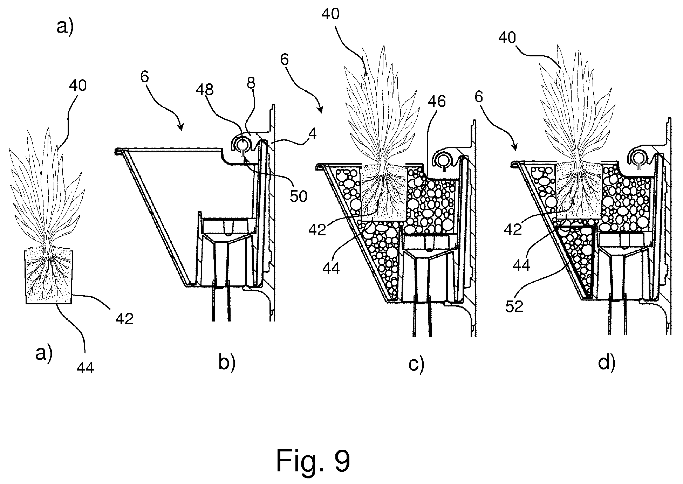

- Fig. 9 a): shows a plant that is intended to be planted in a pot according to the invention;
- Fig. 9 b): shows an empty pot according to the invention;
- Fig. 9 c): shows a plant planted in a pot according to the invention and
- Fig. 9 d): shows the water reservoir within a pot according to the invention.

### Detailed description of the invention

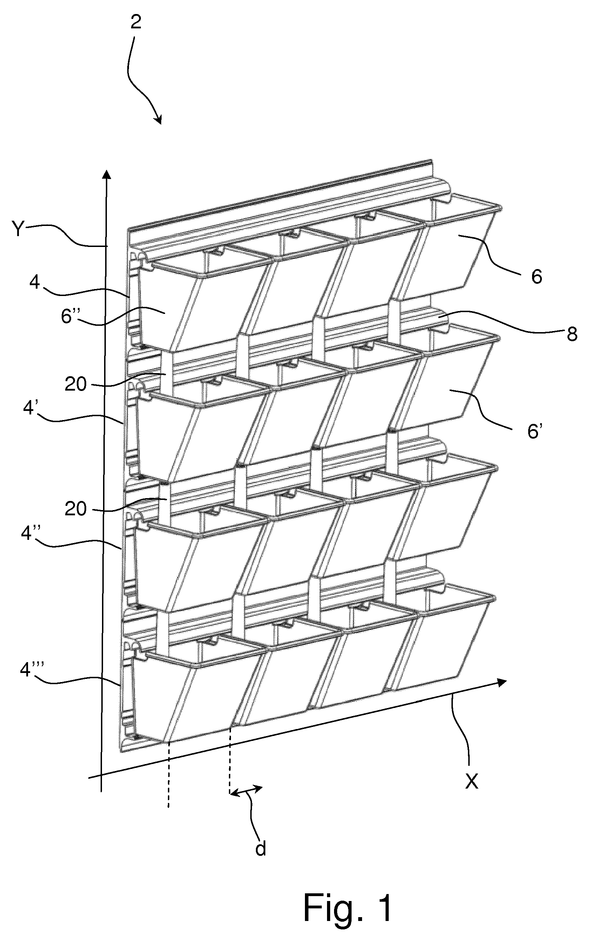

Referring now in detail to the drawings for the purpose of illustrating preferred embodiments of the present invention, a wall module system 2 of the present invention is illustrated in Fig. 1.

Fig. 1 is a perspective view of a wall module system 2 according to the invention. The wall module system 2 comprises a plurality of pots 6 slidably arranged on a number of parallel extending tracks 4, 4', 4", 4"'. The tracks 4, 4', 4", 4"' are attached to each other by means of a mechanical connection. Thus, the wall module system 2 may comprise any desirable number of tracks 4, 4', 4", 4"'.

The wall module system 2 is configured to be attached to or mounted on a wall (not shown) in such a manner that the vertical axis Y of the wall module system 2 extends vertically and that the horizontal axis X of the wall module system 2 extends horizontally.

The pots 6, 6', 6" are slidably attached to the tracks 4, 4', 4", 4"' in such a way that they are configured to be displaced horizontally along the X-axis of the wall module system 2.

The pot are configured to be filled with plants (not shown) planted in potting soil, earth and/or another growth media.

The pots 6, 6', 6" are two by two connected by a connection pipe 20 configured to drain away excess water.

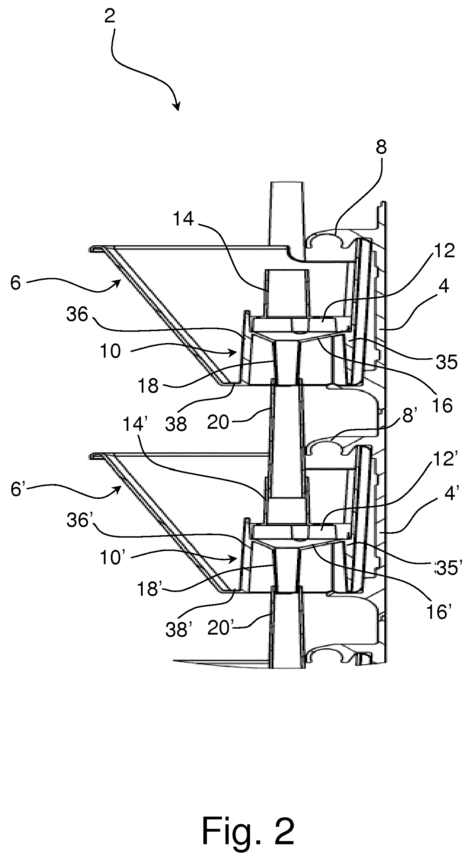

Fig. 2 illustrates a close-up cross-sectional view of two adjacent pots 6, 6' of a wall module system 2 according to the invention. The wall module system 2 comprises a first pot 6 arranged above a second pot 6'. It can be seen that the first pot 6 is attached to a first track 40 and that the second pot 6' is attached to a second track 4' that is attached to the first track by means of a mechanical connection 28. The pots 6, 6' are arranged within corresponding recesses 30, 30' in the tracks 4, 4'.

Each track 4, 4' is provided with a holding member 8 having a profile that is configured to receive and maintain a water pipe (not shown) providing water to the pots 6, 6'.

Each pot 6, 6' comprises a drainage member 10, 10' that comprises walls 35, 35', 36, 36' extending perpendicularly to the bottom 38, 38' of the pots 6, 6' and hereby constitutes a box-shaped compartment.

A funnel member 16, 16' is provided within the compartment of each pot 6, 6'. The funnel members 16, 16' are configured to channel away excess water. The funnel member 16, 16' in each pot 6, 6' is connected to an outlet pipe 18, 18' that collects and carries away excess water from the funnel member 16, 16'. The outlet pipes 18, 18' are connected to a connection pipe 20, 20' that guides excess water to the inlet pipe 14' of the pot arranged below.

A filter member 12, 12' is arranged on the top of the funnel member 16, 16'. The inlet pipes 14, 14' and the corresponding filter members 12, 12' constitute a one-piece body. Similarly, each drainage member 10, 10' comprises a wall 35, 35', 36, 36', a funnel member 16, 16' and an outlet pipe 18, 18 that constitute a one-piece body that is part of the pot 6, 6'.

The pot 6, 6' may be produced in a plastic material e.g. by an injection moulding process.

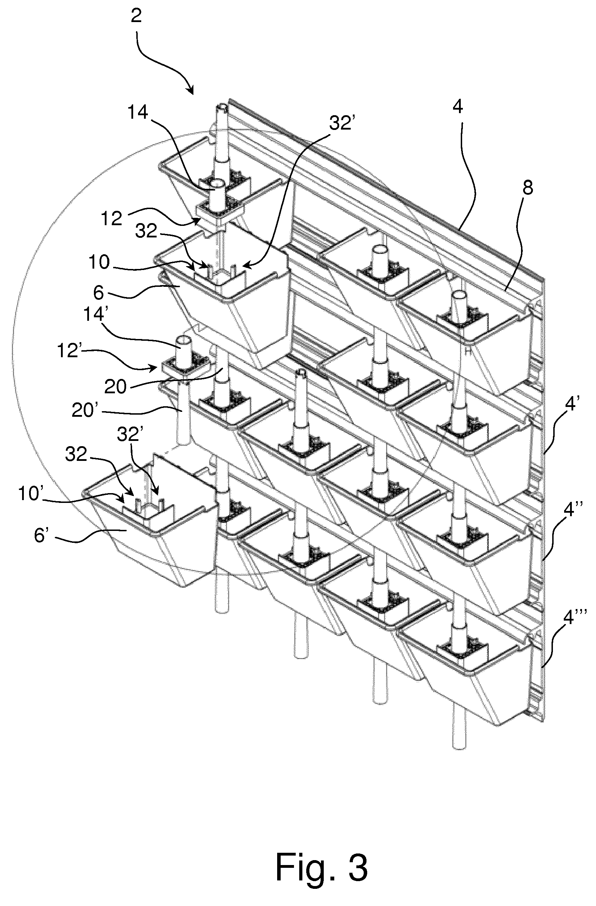

Fig. 3 illustrates a perspective and exploded view of a wall module system 2 according to the invention. The wall module system 2 comprises a plurality of pots 6, 6' slidably mounted on tracks 4, 4', 4", 4"'. It can be seen that a first pot 6 has an integrated drainage member 10 provided with protruding mounting pins 32, 32'. A filter member 12 provided with an inlet pipe 14 is configured to be received and maintained in the drainage member 10.

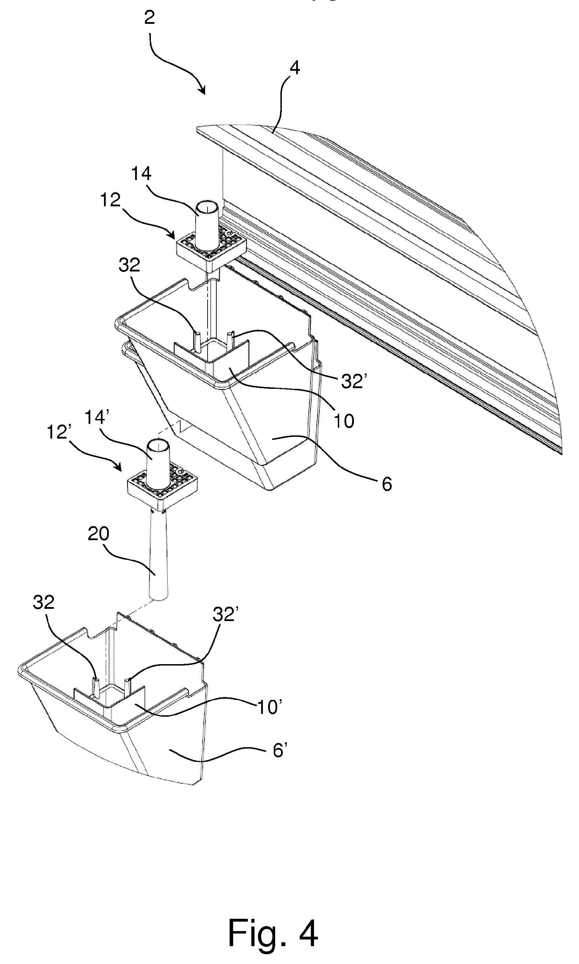

The first pot 6 is adapted to be connected to an underlying second pot 6' by means of a connection pipe 20. The connection pipe 20 is configured to be mounted within and hereby be connected to the inlet pipe 14' of the filter member 12' of the second pot 6'. The second pot 6' is similar to the first pot 6 and comprises a drainage member 10' provided with mounting pins 32, 32'. A section of the wall module system 2 is encircled and showed in Fig. 4 in further detail as a close-up view.

Fig. 4 illustrates a close-up view of a first pot 6 provided with a drainage member 10 having two mounting pins 32, 32'. The first pot 6 comprises a detachably mounted filter member 12 provided with an inlet pipe 14. The filter member 12 is arranged above the first pot 6 for illustration purposes.

A second pot 6' is arranged below the first pot 6. The second pot 6' comprises a drainage member 10' having two mounting pins 32, 32' configured to engage with corresponding mounting holes 34, 34' provided in the filter member 12' of the second pot 6'. A connection pipe 20 is attached to the filter member 12'. The filter members 12, 12' comprise a filter that is adapted to prevent earth from blocking the drainage members 10, 10' of the pots 6, 6'.

The drainage members 10, 10' of the pots 6, 6' are arranged in the corner region of the pots 6, 6'. Hereby, it is achieved that more space is available to plant a plant (see Fig. 9).

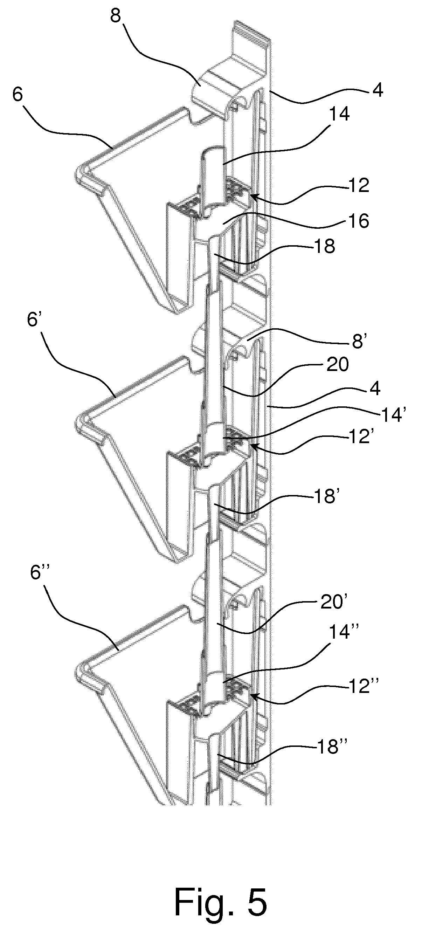

Fig. 5 illustrates a perspective cross-sectional view of three pots 6, 6', 6" arranged above each other. The first and uppermost pot 6 is slidably mounted to a first track 4 having a holding member 8 configured to hold a water hose (not shown) that can provide watering of a plant in the first pot 6. The first pot 6 is provided with a drainage member 10 into which a filter member 12 comprising a filter, an inlet pipe 14, a funnel member 16 and an outlet pipe 18 is arranged.

The outlet pipe 18 of the first pot 6 is arranged within the distal end of a connection pipe 20 connecting the first pot 6 and a second pot 6' arranged below the first pot 6. The outlet pipe 18 of the first pot 6 is conically shaped, and the connection pipe 20 has a conical shape that makes it possible to displace the connection pipe vertically e.g. when a pot has to be removed in order to put a new plant (not shown) into the pot 6. Moreover, the connection pipe 20 is maintained by a underlying inlet pipe 14' having a conical shape that makes it possible to fix the connection pipe 20 to the inlet pipe by means of friction between the outside surface of the connection pipe 20 and the inside surface of the inlet pipe 14' of the second pot 6'.

In this manner, it is possible to dismantle the wall module system 2 according to the invention in an easy and fast way which is a major advantage.

The second pot 6' arranged below the first pot 6 is attached to a second track 4' provided with a holding member 8 configured to hold a water hose. The second pot has a filter member 12 with an outlet pipe 18' that has been inserted into a connection pipe 20' arranged below the second pot 6' and connecting the second pot 6' and a third pot 6" provided with a filter member 12" having an inlet pipe 14" and an outlet pipe 18".

Fig. 6 a) illustrates the wall module system 2 shown in Fig. 3, while Fig. 6 b) illustrates a close-up view of the wall module system 2.

The wall module system 2 is shown as a perspective and exploded view. The wall module system 2 comprises a plurality of pots 6, 6' slidably mounted on tracks 4, 4', 4", 4"'. A first pot 6 has an integrated drainage member 10.

The first pot 6 is adapted to be connected to an underlying second pot 6' by means of a connection pipe 20 that is adapted to be connected to an inlet pipe 14 of the filter member 12 of the second pot 6' provided with a drainage member 10'.

Fig. 6 b) illustrates a first pot 6 slidably attached to a first track 4. The first pot 6 is provided with a drainage member 10 comprising mounting holes 34, 34' and an inlet pipe 14. The drainage member 10 is connected to an underlying second pot 6' (slidably attached to a second track 4') via a connection pipe 20. The connection pipe 20 is connected to the inlet pipe 14' of the second pot 6', while a second connection pipe 20 connects the second pipe 6' and a third pot 6" (slidably attached to a third track 4") arranged below the second pot 6'. The second connection pipe 20' is received by the inlet pipe 14" of the third pot 6".

Fig. 7 a) shows a perspective cross-sectional view of a wall module system 2 according to the invention, while Fig. 7 b) illustrates a close-up view of the wall module system.

The wall module system 2 illustrated in Fig. 7 a) comprises several parallel extending drainage pipes. An outlet pipe 18 is connected to a connection pipe 20' that is further connected to the underlying inlet pipe 14'. The inlet pipe 14' is in fluid communication with an outlet pipe 18' that is further connected to a connection pipe 20". The connection pipe 20" is connected to an inlet pipe 14" that is in fluid communication with an outlet pipe 18". In the same manner, the outlet pipe 18" is attached to a connection member 20'" that is connected to an inlet pipe 14'" that is in fluid connection with an outlet pipe 18"'.

In this manner, all excess water is drained away though the drainage pipes.

Fig. 7 b) illustrates a first track 4 attached to an underlying second track 4'. The first track 4 comprises a holding member 8, while the second track 4' comprises a second holding member 8'.

A first pot comprises a first drainage member 10 into which a filter member 12 is arranged. The filter member 12 comprises an inlet pipe 14, while the outlet pipe 18 of the first pot 6 is integrated in the drainage member 10.

The outlet pipe 18 of the first pot 6 is connected to a connection pipe 20 that is further connected to an inlet pipe 14' of a filter member 12' of a second pot 6' having a drainage member 10'. The drainage member 10' has an outlet pipe 18' that is connected to a connection pipe 20'.

Fig. 8 a) illustrates a schematical, cross-sectional view of a pot 6 being watered. The pot 6 comprises a drainage member 10 having a first wall 35 and a second parallel wall 36. The pot 6 comprises a bottom 38. The walls 35, 36 and the bottom 38 define the drainage member 10 that constitutes a chamber.

The pot 6 is slidably attached to a track 4. The pot 6 comprises a filter member 12 having a filter and an inlet pipe 14 that is formed as a one-piece body. The filter member 12 is detachably attached to the inside of the drainage member 10. A funnel member 16 comprising an inclined funnel is integrated into the drainage member 10. The drainage member 12 moreover comprises an outlet pipe 38 extending parallel to the inlet pipe 14.

The pot 6 is watered by water drops 26 fed into the pot 6. The water 22 accumulates in the lower portion of the pot 6. As long as the water level is below the edge 24, no water will be drained. A holding member 8 is provided in the track 4. The holding member 8 is configured to hold a water pipe (not shown) that supplies the pot with water drops 26.

Fig. 8 b) illustrates a schematical, cross-sectional view of the pot 6 in a state in which excess water 26 is drained away from the pot 6. The level of the water 22 in the pot 6 exceeds the position of the edge 24 of the drainage member 12.

Accordingly, excess water enters the filter member 12 and is further guided away through the outlet pipe 18 and further through the connection pipe 20 - this is indicated by the water drops 26.

Fig. 8 c) illustrates a schematical, cross-sectional view of a pot 6 after the excess water has been drained away. Thus, the level of the water 22 is below the edge 24 of the drainage member 12. The pot 6, however, holds a significant amount of water 22 which can be consumed by a plant (not shown) in the pot 6.

The draining system according to the invention secures that excess water is prevented from being brought into contact with the plant or the media in which the plant is planted. Hereby, spreading of plant diseases caused by pathogens (infectious organisms) can be prevented.

Fig. 9 a) illustrates a schematical view of a plant 40 intended to be planted into a pot 6 according to the invention. The plant 40 comprises roots 43 embedded in potting soil 44.

Fig. 9 b) illustrates a schematical, cross-sectional view of a pot 6 according to the invention. The pot 6 is attached to a track 4 provided with a holding member 8. A water pipe 48 is attached to the holding member 8. The water pipe 48 is provided with a water pipe drip nozzle 50 configured to deliver water drops to the pot 6.

In Fig. 9 c), the plant 40 has been planted into the pot 6. The remaining space in the pot 6 has been filled up with pumice stone 46. Instead of pumice stone 46, it is possible to use other types of filling material.

Fig. 9 d) illustrates a cross-sectional view of the pot 6 shown in Fig. 9c). It is indicated that the pot 6 comprises a water reservoir 52. When the pot 6 has been watered, the water reservoir 52 will be filled up with water, and thus the water reservoir 52 will supply the plant 40 with water for a relatively long period of time. Typically, it would be possible to water the pot 6 once every third week.

The water module system according to the invention makes it possible to cultivate plants indoor and water the plants 40 on a regular basis without access to a drain in the building. The excess water may be collected in a mobile tank that can be emptied in any suitable location.

It is important to underline that the water module system according to the invention is suitable for being used to cultivate plants arranged outdoor. The water module system according to the invention makes it possible to cultivate plants without access to a drain.

Moreover, the water module system according to the invention makes it possible to water the plants 40 without access to water supply or a tank and a pump circulating the water. By using a water module system according to the invention, it is possible to water the plants 40 by using a mobile water storage and a collection tank. Water may be delivered to the plants 40 from the mobile water storage, while excess water may be collected in the collection tank.

The water module system according to the invention does not require installation of a tank or pipes. Accordingly, no bores are required in either the wall, floor or ceiling in the room in which the water module system has to be installed.

### List of reference numerals

- 2: - Wall module system
- 4, 4', 4", 4"': - Track
- 6, 6', 6": - Pot
- 8, 8', 8": - Holding member
- 10, 10', 10": - Drainage member
- 12, 12', 12": - Filter member
- 14, 14', 14", 14"': - Inlet pipe
- 16, 16': - Funnel member
- 18, 18', 18", 18"': - Outlet pipe
- 20, 20', 20", 20"': - Connection pipe
- 22: - Water
- 24: - Edge
- 26: - Water drop
- 28, 28': - Mechanical connection
- 30, 30': - Recess
- 32, 32': - Mounting pin
- 34, 34': - Mounting hole
- 35, 35', 36, 36': - Wall
- 38, 38': - Bottom
- 40: - Plant
- 42: - Root
- 44: - Potting soil
- 46: - Pumice stone
- 48: - Water pipe
- 50: - Water pipe drip nozzle
- 52: - Water reservoir

## Claims

1. A wall module system (2) comprising a plurality of vertically spaced plant pots (6, 6', 6", 6"'), where the wall module system (2) comprises one or more tracks (4, 4', 4", 4"') constituting a base for mounting the pots (6, 6', 6", 6"'), where the pots (6, 6', 6", 6"') are configured to be attached to one or more tracks (4, 4', 4", 4"'), where each pot (6, 6', 6", 6"') is provided with means for draining excess water (22), wherein each pot (6, 6', 6", 6"') is provided with a water reservoir (52) inside the pot (6, 6', 6", 6"'), and a drainage member (10) that is configured to drain excess water (22) from the pot (6, 6', 6", 6"') **characterized in that** the excess water (22) is conducted through the underlying pot (6', 6", 6") without bringing the excess water (22) into contact with a media such as potting soil, when the media such as potting soil is filled into the underlying pot (6' 6", 6").

2. A wall module system (2) according to claim 1, **characterised in that** the pots (6, 6', 6", 6"') are provided with a drainage member (10) having an output pipe (18, 18', 18") inserted into a connection pipe (20, 20', 20") extending between the respective pot (6, 6', 6", 6"') and an underlying pot (6', 6", 6"').

3. A wall module system (2) according to claim 2, **characterised in that** the pots (6, 6', 6", 6"') are provided with an inlet pipe (14, 14', 14") and that the connection pipe (20, 20', 20") connected to the superjacent pot (6, 6', 6") is connected to the inlet pipe (14, 14', 14").

4. A wall module system (2) according to claim 2 or 3, **characterised in that** the pots (6, 6', 6", 6"') are provided with a drainage member (10) constituting a chamber within the pot (6, 6', 6", 6"'), where the chamber is provided with an opening through which the outlet pipe (18, 18', 18") and/or the connection pipe (20, 20', 20") extend.

5. A wall module system (2) according to one of the preceding claims, **characterised in that** a filter member (12, 12', 12") is removably arranged in the drainage member (10) and that the filter member (12, 12', 12") comprises a filter configured to prevent the drainage member (10) from clogging.

6. A wall module system (2) according to one of the preceding claims, **characterised in that** a funnel member (16, 16', 16", 16"') is provided in the drainage member (10) and that the funnel member (16, 16', 16", 16"') comprises a funnel configured to drain away excess water entering the drainage member (10).

7. A wall module system (2) according to claim 2, **characterised in that** the connection pipe (20, 20', 20") is slidably mounted to the adjacent outlet pipe (18, 18', 18") so that the connection pipe (20, 20', 20") is vertically displaceable.

8. A wall module system (2) according to one of the preceding claims, **characterised in that** the pots (6, 6', 6") are slidably mounted in tracks in such a manner that the horizontal position of the pots (6, 6', 6", 6"') can be adjusted.

9. A method for cultivating plants in a wall module system (2) according to one of the claims 1-8, where the wall module system (2) comprises a plurality of pots (6, 6', 6", 6"'), **characterised in that** the method comprises the step of watering the pots (6, 6', 6", 6"') and draining excess water (22) through an underlying pot (6', 6", 6") without bringing the excess water (22) into contact with a media such as potting soil, when such media (e.g. potting soil) has been filled into the pot (6' 6", 6").

10. Use of a wall module system (2) according to one of the preceding claims 1-8 for cultivating plants.

## Patentansprüche

1. Wandmodulsystem (2) umfassend eine Vielzahl vertikal beabstandeter Pflanztöpfe (6, 6', 6", 6"'), wobei das Wandmodulsystem (2) eine oder mehrere Schienen (4, 4', 4", 4"') umfasst, die eine Basis zum Befestigen der Töpfe (6, 6', 6", 6"') bilden, wobei die Töpfe (6, 6', 6", 6"') dazu ausgebildet sind, an einer oder mehreren Schienen (4, 4', 4", 4"') angebracht zu werden, wobei jeder Topf (6, 6', 6", 6"') mit Mitteln zum Ableiten von überschüssigem Wasser (22) versehen ist,
wobei jeder Topf (6, 6', 6", 6"') mit einem Wasserreservoir (52) im Inneren des Topfes (6, 6', 6", 6"') versehen ist, sowie mit einem Ablaufelement (10), das dazu ausgebildet ist, überschüssiges Wasser (22) aus dem Topf (6, 6', 6", 6"') zu leiten,
**dadurch gekennzeichnet, dass** das überschüssige Wasser (22) durch den darunterliegenden Topf (6', 6", 6"') geleitet wird, ohne das überschüssige Wasser (22) in Kontakt mit einem Medium, wie etwa Pflanzerde, zu bringen, wenn das Medium wie etwa Pflanzerde in den darunterliegenden Topf (6', 6", 6") eingefüllt ist.

2. Wandmodulsystem (2) nach Anspruch 1, **dadurch gekennzeichnet, dass** die Töpfe (6, 6', 6", 6"') mit einem Ablaufelement (10) versehen sind, das ein Ausgangsrohr (18, 18', 18") aufweist, das in ein Verbindungsrohr (20, 20', 20") eingesetzt ist, das sich zwischen dem jeweiligen Topf (6, 6', 6", 6"') und einem darunterliegenden Topf (6', 6", 6"') erstreckt.

3. Wandmodulsystem (2) nach Anspruch 2, **dadurch gekennzeichnet, dass** die Töpfe (6, 6', 6", 6"') mit einem Einlassrohr (14, 14', 14") versehen sind, und dass das Verbindungsrohr (20, 20', 20"), das mit dem darüberliegenden Topf (6, 6', 6") verbunden ist, mit dem Einlassrohr (14, 14', 14") verbunden ist.

4. Wandmodulsystem (2) nach Anspruch 2 oder 3, **dadurch gekennzeichnet, dass** die Töpfe (6, 6', 6", 6"') mit einem Ablaufelement (10) versehen sind, das eine Kammer innerhalb des Topfes (6, 6', 6", 6"') bildet, wobei die Kammer mit einer Öffnung versehen ist, durch die sich das Auslassrohr (18, 18', 18") und/oder das Verbindungsrohr (20, 20', 20") erstrecken.

5. Wandmodulsystem (2) nach einem der vorhergehenden Ansprüche, **dadurch gekennzeichnet, dass** ein Filterelement (12, 12', 12") entfernbar in dem Ablaufelement (10) angeordnet ist, und dass das Filterelement (12, 12', 12") einen Filter umfasst, der dazu ausgebildet ist, ein Verstopfen des Ablaufelements (10) zu verhindern.

6. Wandmodulsystem (2) nach einem der vorhergehenden Ansprüche, **dadurch gekennzeichnet, dass** ein Trichterelement (16, 16', 16", 16"') in dem Ablaufelement (16) vorgesehen ist, und dass das Trichterelement (16, 16', 16", 16"') einen Trichter umfasst, der dazu ausgebildet ist, überschüssiges Wasser abzuleiten, das in das Ablaufelement (10) eintritt.

7. Wandmodulsystem (2) nach Anspruch 2, **dadurch gekennzeichnet, dass** das Verbindungsrohr (20, 20', 20") verschiebbar an dem benachbarten Auslassrohr (18, 18', 18") montiert ist, so dass das Verbindungsrohr (20, 20', 20") vertikal verschiebbar ist.

8. Wandmodulsystem (2) nach einem der vorhergehenden Ansprüche, **dadurch gekennzeichnet, dass** die Töpfe (6, 6', 6") in Schienen auf solche Weise verschiebbar montiert sind, dass die horizontale Stellung der Töpfe (6, 6', 6", 6"') eingestellt werden kann.

9. Verfahren zur Kultivierung von Pflanzen in einem Wandmodulsystem (2) nach einem der Ansprüche 1 bis 8, wobei das Wandmodulsystem (2) eine Vielzahl von Töpfen (6, 6', 6", 6"') umfasst, **dadurch gekennzeichnet, dass** das Verfahren den Schritt des Bewässerns der Töpfe (6, 6', 6", 6"') und des Ableitens von überschüssigem Wasser (22) durch einen darunterliegenden Topf (6', 6", 6"), ohne das überschüssige Wasser (22) in Kontakt mit einem Medium, wie etwa Pflanzerde, zu bringen, wenn das Medium (z.B. Pflanzerde) in den darunterliegenden Topf (6', 6", 6") eingefüllt ist, umfasst.

10. Verwendung eines Wandmodulsystems (2) nach einem der vorhergehenden Ansprüche 1 bis 8 zur Kultivierung von Pflanzen.

## Revendications

1. Système de module mural (2) comprenant une pluralité de pots de plantes espacés verticalement (6, 6', 6", 6"'), où le système de module mural (2) comprend une ou plusieurs piste(s) (4, 4', 4", 4"') constituant une base pour le montage des pots (6, 6', 6", 6"'), où les pots (6, 6', 6", 6"') sont configurés pour être fixés à une ou plusieurs piste(s) (4, 4', 4", 4"'), où chaque pot (6, 6', 6", 6"') est pourvu d'un moyen pour évacuer l'eau en excès (22),
où chaque pot (6, 6', 6", 6"') est pourvu d'un réservoir d'eau (52) à l'intérieur du pot (6, 6', 6", 6"') et d'un élément d'évacuation (10) qui est configuré pour évacuer l'eau en excès (22) du pot (6, 6', 6", 6"'), **caractérisé en ce que** l'eau en excès (22) est guidée à travers le pot sous-jacent (6', 6", 6") sans amener l'eau en excès (22) en contact avec un milieu tel qu'un terreau, lorsque le milieu tel qu'un terreau est introduit dans le pot sous-jacent (6', 6", 6").

2. Système de module mural (2) selon la revendication 1, **caractérisé en ce que** les pots (6, 6', 6", 6"') sont pourvus d'un élément d'évacuation (10) ayant un tuyau de sortie (18, 18', 18") inséré dans un tuyau de raccordement (20, 20', 20") s'étendant entre le pot respectif (6, 6', 6", 6"') et un pot sous-jacent (6', 6", 6"').

3. Système de module mural (2) selon la revendication 2, **caractérisé en ce que** les pots (6, 6', 6", 6"') sont pourvus d'un tuyau d'entrée (14, 14', 14") et **en ce que** le tuyau de raccordement (20, 20', 20") relié au pot surjacent (6, 6', 6") est relié au tuyau d'entrée (14, 14', 14").

4. Système de module mural (2) selon la revendication 2 ou 3, **caractérisé en ce que** les pots (6, 6', 6", 6"') sont pourvus d'un élément d'évacuation (10) constituant une chambre dans le pot (6, 6', 6", 6"'), où la chambre est pourvue d'une ouverture à travers laquelle s'étend/s'étendent le tuyau de sortie (18, 18', 18") et/ou le tuyau de raccordement (20, 20', 20").

5. Système de module mural (2) selon l'une des revendications précédentes, **caractérisé en ce qu'**un élément filtrant (12, 12', 12") est agencé de manière amovible dans l'élément d'évacuation (10) et **en ce que** l'élément filtrant (12, 12', 12") comprend un filtre configuré pour empêcher l'obstruction de l'élément d'évacuation (10).

6. Système de module mural (2) selon l'une des revendications précédentes, **caractérisé en ce qu'**un élément à entonnoir (16, 16', 16", 16"') est prévu dans l'élément d'évacuation (10) et **en ce que** l'élément à entonnoir (16, 16', 16", 16''') comprend un entonnoir configuré pour évacuer l'eau en excès entrant dans l'élément d'évacuation (10).

7. Système de module mural (2) selon la revendication 2, **caractérisé en ce que** le tuyau de raccordement (20, 20', 20") est monté en coulissement sur le tuyau de sortie adjacent (18, 18', 18") de sorte que le tuyau de raccordement (20, 20', 20") puisse se déplacer verticalement.

8. Système de module mural (2) selon l'une des revendications précédentes, **caractérisé en ce que** les pots (6, 6', 6") sont montés en coulissement dans des pistes de sorte que la position horizontale des pots (6, 6', 6", 6"') puisse être ajustée.

9. Procédé pour cultiver des plantes dans un système de module mural (2) selon l'une des revendications 1 à 8, où le système de module mural (2) comprend une pluralité de pots (6, 6', 6", 6"'), **caractérisé en ce que** le procédé comprend l'étape d'arrosage des pots (6, 6', 6", 6"') et d'évacuation de l'eau en excès (22) à travers un pot sous-jacent (6', 6", 6") sans amener l'eau en excès (22) en contact avec un milieu tel qu'un terreau, lorsque ce milieu (par exemple un terreau) a été introduit dans le pot (6', 6", 6")

10. Utilisation d'un système de module mural (2) selon l'une des revendications 1 à 8 pour cultiver des plantes.
